# EUROPEAN PATENT APPLICATION

(11) **EP 4 571 876 A1**
(43) Date of publication of application: **18.06.2025**
(21) Application number: 24861319.2
(22) Date of filing: 17.05.2024
(51) Int. Cl.: H01M 4/139, H01M 4/62, H01M 4/13, H01M 10/052

(54) **METHOD FOR MANUFACTURING HIGH-CAPACITY THICK FILM ELECTRODE FOR BATTERY, ELECTRODE MANUFACTURED THEREBY, AND BATTERY COMPRISING SAME**

(30) Priority: 27.09.2023 KR 20230130625
(71) Applicant: Korea Institute of Machinery & Materials, Daejeon 34103 (KR)
(72) Inventor: OH, Minsub, Seoul 01900 (KR); SO, Hye Mi, Daejeon 34120 (KR); HYUN, Seung Min, Daejeon 35235 (KR); KIM, Areum, Daejeon 34127 (KR); LEE, Jinyeong, Daejeon 34116 (KR)
(74) Representative: Lewis Silkin LLP
(86) International application number: PCT/KR2024/006726
(87) International publication number: WO 2025/070928

(57) **Abstract**

In a method for manufacturing a high capacity thick film electrode for a battery, an electrode manufactured by the method, and a battery having the electrode, the method includes mixing a slurry having an active material, a binder, a conductive material and a solvent, heating and homogenizing the slurry, forming a conductive fiber base having a conductive fiber, coating the slurry on the conductive fiber base by a predetermined thickness, and cooling and thermally induced phase separating (TIPS) the coated slurry.

## Description

### BACKGROUND OF THE INVENTION

### TECHNICAL FIELD

Exemplary embodiments of the present invention relate to a method for manufacturing a high capacity thick film electrode for a battery, an electrode manufactured by the method, and a battery having the electrode. More particularly, exemplary embodiments of the present invention relate to a method for manufacturing a high capacity thick film electrode for a battery, an electrode manufactured by the method, and a battery having the electrode, capable of manufacturing relatively thick electrodes that are difficult to manufacture beyond a certain thickness due to limitations in conductivity, and capable of increasing the amount of active material while maintaining ionic and electrical conductivity, by manufacturing using a thermally induced phase separation process.

### DISCUSSION OF THE RELATED ART

Generally, a lithium-ion battery includes a current collector coated with electrode material, an electrolyte, a separator, and an exterior material. Recently, research is being conducted to increase the amount of electrode material and reduce the current collector in order to implement a high-capacity battery in a limited structure.

However, when the thickness of the electrode material increases, there is a problem that not only ionic conductivity but also electrical conductivity does not improve. Thus, electrode materials of a certain thickness or less must be applied, which is a major technical barrier to manufacturing high-capacity batteries.

Accordingly, Korean Patent No. 10-2533884 discloses a technology for manufacturing a high-capacity lithium secondary battery with high charging and discharging efficiency. In addition, Korean Laid-open Patent No. 10-2023-0087677 discloses technology for thick film electrodes with uniform and excellent electrical conductivity

Here, in Korean Laid-open Patent No. 10-2023-0087677, in order to eliminate or minimize the phenomenon of concentration of conductive materials and binders that occurs when solvent evaporation in a wet process for thickening electrodes, a technology has been disclosed that minimizes problems that occur during solvent evaporation by forming a high solid content and a small amount of solvent during slurry production.

However, a certain amount of solvent or more is essential for uniform distribution and mixing of the slurry, and therefore, technology for reducing the amount of solvent is also limited. Then, manufacturing thick film electrodes still has limitations that make it technically difficult to implement.

Related prior arts include Korean patent No. 10-2533884 and Korean Laid-open Patent No. 10-2023-0087677

### SUMMARY

Exemplary embodiments of the present invention provide a method for manufacturing a high capacity thick film electrode for a battery, capable of manufacturing relatively thick electrodes that are difficult to manufacture beyond a certain thickness due to limitations in conductivity, and capable of increasing the amount of active material while maintaining ionic and electrical conductivity, by manufacturing using a thermally induced phase separation process.

In addition, exemplary embodiments of the present invention also provide an electrode manufactured by the method.

In addition, exemplary embodiments of the present invention also provide a battery having the electrode.

According to one aspect of the present invention, the method includes mixing a slurry having an active material, a binder, a conductive material and a solvent, heating and homogenizing the slurry, forming a conductive fiber base having a conductive fiber, coating the slurry on the conductive fiber base by a predetermined thickness, and cooling and thermally induced phase separating (TIPS) the coated slurry.

In an exemplary embodiment, in the heating and homogenizing the slurry, the binder may be heated so that the binder is completely dissolved in the solvent.

In an exemplary embodiment, in the coating the slurry, the slurry may be coated on the conductive fiber base by a predetermined thickness considering a thickness of the electrode.

In an exemplary embodiment, in the cooling and thermally induced phase separating, the binder may combine with the conductive fiber and form a porous structure, as the slurry cools.

In an exemplary embodiment, in the cooling and thermally induced phase separating, a predetermined pressure may be uniformly applied to the slurry formed as the porous structure.

In an exemplary embodiment, the active material may be an anode active material or a cathode active material, the binder may be polyvinylidene fluoride (PVDF), the conductive material may be a carbon black, and the solvent may be a carbonate based electrolyte solvent.

In an exemplary embodiment, the solvent may be a mixture of ethylene carbonate (EC) and polycarbonate (PC).

According to another aspect of the present invention, the method includes mixing a slurry having an active material, a binder, a conductive material and a solvent, heating and homogenizing the slurry, forming a conductive fiber base having a conductive fiber on a mold, coating the slurry on the conductive fiber base by a predetermined thickness, deforming the conductive fiber base and the coated slurry, and removing the mold.

In an exemplary embodiment, the mold may have a space embedded in a three-dimensional shape.

In an exemplary embodiment, in the forming the conductive fiber base on the mold, the conductive fiber base may extend over the space, and an end edge of the conductive fiber base may be positioned at the mold.

In an exemplary embodiment, in the deforming the conductive fiber base and the coated slurry, the conductive fiber base and the coated slurry may be pressurized to be deformed.

In an exemplary embodiment, the conductive fiber base and the coated slurry may be deformed using a pressing mold having a protrusion inserted into the space.

In an exemplary embodiment, in the deforming the conductive fiber base and the coated slurry, the coated slurry may be cooled and may be subjected to thermally induced phase separation (TIPS).

In an exemplary embodiment, the coated slurry may be cooled by an additional cooling unit or a cooling unit configured in the pressing mold.

In an exemplary embodiment, with the pressing mold itself cooled, the conductive fiber base and the coated slurry may be deformed and cooled with a predetermined pressure.

According to still another aspect of the present invention, an electrode manufactured by the method above has a three-dimensional shape.

In an exemplary embodiment, the electrode may have any one of a hemispherical shape, a cone shape, a donut shape, a polygonal block shape and a polygonal pyramid shape.

According to still another aspect of the present invention, a battery includes an anode electrode manufactured by the method above and having an anode active material, a cathode electrode manufactured by the method above and having a cathode active material, a separator disposed between the anode electrode and the cathode electrode, an upper cover configured to cover an outside of the anode electrode, and a lower cover configured to cover an outside of the cathode electrode.

In an exemplary embodiment, the anode electrode, the cathode electrode, the separator, the upper cover and the lower cover may be stacked with each other to form a three-dimensional shape.

According to some exemplary embodiments of the present invention, in the manufacture of electrodes, the active material, conductive material and binder are complexed through so-called thermally induced phase separation (TIPS) with respect to the slurry coated on the conductive fiber base, so that the electrode layer is combined with the conductive fiber and forms a porous structure, and an electrode in which the conductive fiber acts as a current collector may be possible to be manufactured. Accordingly, it is possible to manufacture the electrode having relatively high mechanical strength, ionic conductivity, and electrical conductivity.

In particular, as the conductive fibers are combined in a form embedded in the slurry, a structure is produced in which the current collector is uniformly distributed throughout the electrode. Thus, even if it is formed as a thick film electrode with a relatively large thickness, excellent electrochemical properties of the electrode may be maintained. Furthermore, a constant electrical capacity may be maintained regardless of repetitive bending deformation, thereby improving electrical stability.

Alternatively, in the manufacture of the electrode, a mold may be used to manufacture a three-dimensional electrode with a porous structure with conductive fibers embedded therein, thereby maintaining the mechanical stability of the three-dimensional shape and diversifying the usability of the electrode with various structures.

The mold is manufactured to include a space of the desired three-dimensional shape, and in a state in which a slurry is coated based on the conductive fiber, the shapes of the slurry and the conductive fiber are changed using a pressure mold and phase separation is performed. An electrode having mechanical stability of the three-dimensional shape may be easily manufactured.

Therefore, the electrode manufactured in this way has the electrical, mechanical, and chemical properties of the previous planar thick film electrode and may be used as a variety of three-dimensional structure electrodes.

In particular, the electrode may be manufactured into a battery using other components having the same shape and structure, thus diversifying its usability into a three-dimensional battery with excellent electrical, mechanical, and chemical properties.

### BRIEF DESCRIPTION OF THE DRAWINGS

FIG. 1 is a flow chart illustrating a method for manufacturing a high capacity thick film electrode for a battery according to an example embodiment of the present invention;
FIG. 2A, FIG. 2B, FIG. 2C and FIG. 2D are process views illustrating the method of FIG. 1;
FIG. 3 is an image showing an electrode manufactured by the method of FIG. 1;
FIG. 4A and FIG. 4B are images showing flow of ions and charges in the electrode of the prior art and the electrode of FIG. 1;
FIG. 5A is a graph showing a Nyquist plot after periodically charging and discharging three times for each electrode of FIG. 4A and FIG. 4B, and FIG. 5B is a graph showing the peak current versus the square root of the scan speed for each electrode of FIG. 4A and FIG. 4B;
FIG. 6A is an image showing the electrode of the prior art and the electrode of FIG. 1, FIG. 6B is a graph showing the stress/strain tensile strength for each electrode, and FIG. 6C is a graph showing electrical resistance according to thickness for each electrode;
FIG. 7 is a graph showing a charge/discharge profile of the battery applied with the electrode of FIG. 4B;
FIG. 8 is a flow chart illustrating a method for manufacturing a high capacity thick film electrode for a battery according to another example embodiment of the present invention;
FIG. 9A, FIG. 9B, FIG. 9C and FIG. 9D are process views illustrating the method of FIG. 8;
FIG. 10A and FIG. 10B are images showing an electrode manufactured by the method of FIG. 8;
FIG. 11 is an exploded perspective view illustrating a battery having the electrode manufacture by the method of FIG. 8.

**<Reference numerals>**

| | | | |
|---|---|---|---|
| 10 : | active material | 20 : | binder |
| 30 : | conductive material | 40 : | solvent |
| 100 : | slurry | 101 : | homogenous slurry |
| 110 : | conductive fiber base | 111 : | conductive fiber |
| 200, 201, 202, 203 : | electrode | 300 : | mold |
| 301, 302 : | space | 310 : | pressing mold |
| 400 : | battery | 410 : | separator |
| 420 : | lower cover | 430 : | upper cover |

### DETAILED DESCRIPTION OF THE INVENTION

The present invention is described more fully hereinafter with reference to the accompanying drawings, in which exemplary embodiments of the present invention are shown. The present invention may, however, be embodied in many different forms and should not be construed as limited to the exemplary embodiments set forth herein. Rather, these exemplary embodiments are provided so that this disclosure will be thorough and complete, and will fully convey the scope of the present invention to those skilled in the art.

The terms are used only for the purpose of distinguishing one component from another. The terms used in this application are only used to describe specific embodiments and are not intended to limit the invention. Singular expressions include plural expressions unless the context clearly dictates otherwise.

It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Hereinafter, the present invention will be explained in detail with reference to the accompanying drawings.

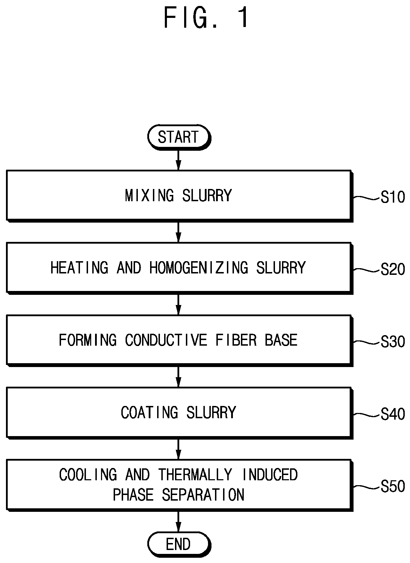

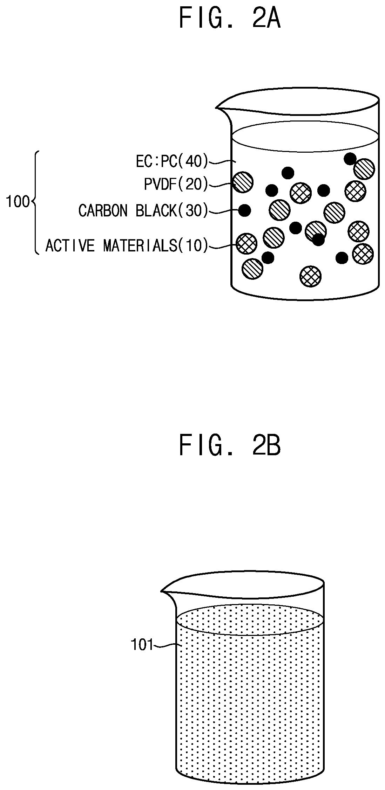

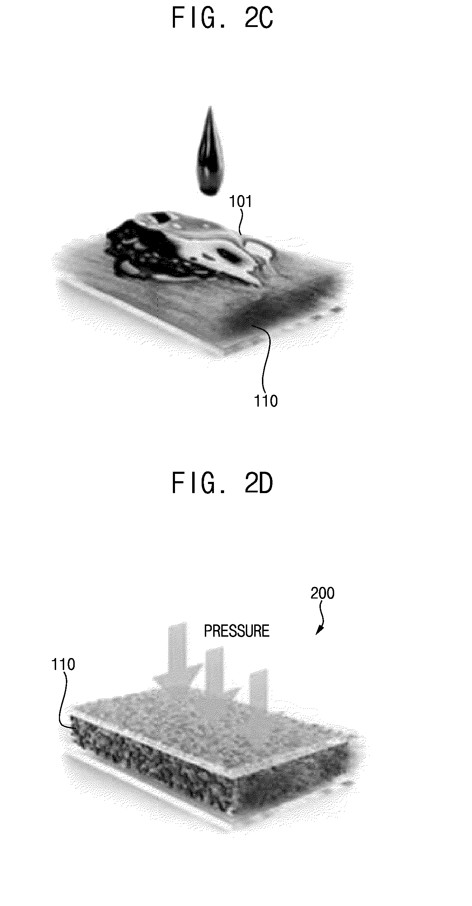

FIG. 1 is a flow chart illustrating a method for manufacturing a high capacity thick film electrode for a battery according to an example embodiment of the present invention. FIG. 2A, FIG. 2B, FIG. 2C and FIG. 2D are process views illustrating the method of FIG. 1.

Referring to FIG. 1 and FIG. 2A, in the method for manufacturing a high capacity thick film electrode for a battery (hereinafter, the method for manufacturing the electrode), a slurry 100 is mixed (step S10). In the mixing the slurry (step S10), an active material 10 such as an anode active material or a cathode active material, a binder 20, a conductive material 30, and a solvent 40 are mixed as a slurry type.

Here, the active material 10 may be the anode active material or the cathode active material, depending on whether the manufactured electrode is an anode or a cathode. In addition, the binder 20 is an adhesive material inducing the conductive material 30 to adhere well to a collector, etc. and may be polyvinylidene fluoride (PVDF) but not limited thereto.

The conductive material 30 has conductivity and may be a carbon black but not limited thereto.

In addition, the solvent 40 is for uniformly mixing the active material, the binder and the conductive material, and may be a carbonate-based solvent and may be a carbonate-based electrolyte solvent. For example, the solvent 40 may be a mixed solvent of ethylene carbonate (EC) and polycarbonate (PC), but not limited thereto.

Accordingly, after forming the slurry 100 by mixing the active material, the binder, the conductive material and the solvent with each other (step S10), referring to FIG. 1 and FIG. 2B, the slurry 100 is heated and homogenized (step S20). For example, in the homogenized process (step S20), the heating may be performed so that the binder 20 is completely dissolved in the solvent 40.

Accordingly, to dissolve the binder 20 in the solvent 40 completely, the heating may be performed with a temperature above the melting point of the binder 20. Here, the method of the heating with the temperature above the melting point of the binder 20 is not limited and any conventional method may be applied.

The slurry 100 is heated and the binder 20 is completely dissolved in the solvent 40, and then the binder 20 is homogenized as a type of the slurry 101 with the active material, the conductive material and the solvent as illustrated in FIG. 2B. Thus, the homogenized slurry 101 is manufactured.

Then, referring to FIG. 1 and FIG. 2C, a conductive fiber base 110 having a conductive fiber is formed with a predetermined area (step S30).

Here, the conductive fiber may be a metal wire such as SUS fiber with a thickness of several tens of micrometers (µm) or less, and these unit conductive fibers are complexly entangled to form the conductive fiber base 110.

In addition, the area of the conductive fiber base 110 may be formed in various ways considering the area of the final electrode to be manufactured, and the range is not limited.

Accordingly, after the conductive fiber base 110 is separately manufactured, referring to FIG. 1 and FIG. 2C, the homogenized slurry 101 is coated on the conductive fiber base 110 with a predetermined thickness (step S40).

In the coating process (step S40), the thickness of the coating may be controlled variously.

In the present example embodiment, as the slurry 101 is coated on the conductive fiber base 110, the conductive fiber included in the conductive fiber base 110 is embedded and combined with the slurry 101. Thus, the conductive fiber that serves as the current collector may be uniformly bonded to the coated slurry 101 as a whole.

Thus, even if the thickness of the electrode is increased by coating the slurry 101 thickly, the electrochemical properties of the electrode may be maintained stably.

Accordingly, the electrode may be manufactured by coating the slurry 101 with a relatively thick thickness, and the thickness of the slurry 101 may be varied in various ways in consideration of the various thicknesses of the electrode to be manufactured.

Then, referring to FIG. 1 and FIG. 2D, the slurry 101 coated on the conductive fiber base 110 with a predetermined thickness is cooled and is performed as thermally induced phase separation (TIPS), and then the electrode 200 is finally manufactured (step S50).

Here, in the TIPS, the slurry 101 is cooled to a predetermined temperature or lower, and the binder 20, which was slurried by heating in the previous homogenizing process (step S20) so that all of the binder 20 is dissolved in the solvent 40, is solidified through the cooling.

When cooling the slurry 101, for example, the binder 20 may be solidified by cooling below the melting point of the binder 20. Furthermore, as in the heating process, the method of the cooling process is not limited, and various conventional cooling processes may be applied.

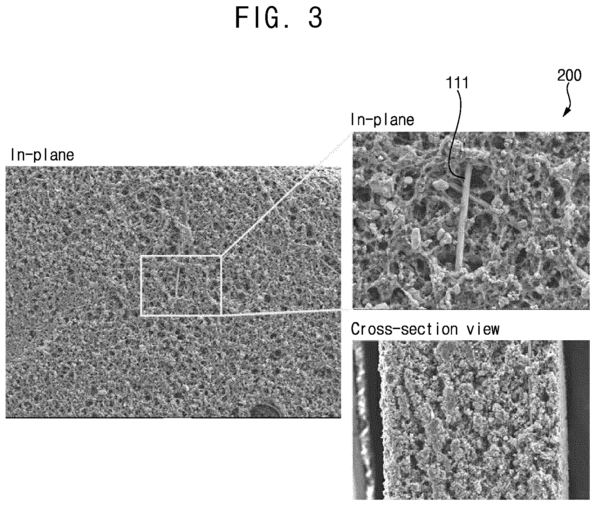

Accordingly, in the process of cooling and solidifying the binder 20, the binder 20 is embedded and combined with the conductive fiber 111 (referring FIG. 3) included in the conductive fiber base 110, and has a porous structure.

The binder 20 has a porous structure and is embedded and combined with the conductive fiber 111, as shown in FIG. 3.

FIG. 3 is an image showing an electrode manufactured by the method of FIG. 1. As illustrated in FIG. 3, the electrode 200 has a porous structure in a whole, and the conductive fiber 111 is distributed inside the porous structure. Here, the distribution of the conductive fiber 111 may have a random distribution, but may be distributed throughout the electrode 200 with a predetermined uniformity as a whole.

As described above, by cooling and solidifying the binder 20 through the TIPS, it is possible to manufacture the electrode 200 with the porous structure in which the conductive fiber 111 is distributed throughout. In the electrode 200, the conductive fiber 111 that serves as the current collector is distributed throughout the inside of the electrode 200.

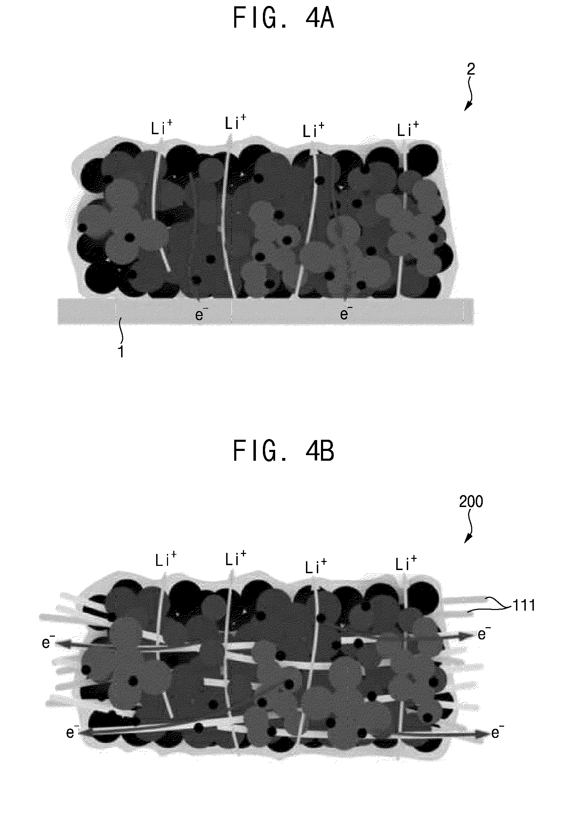

FIG. 4A and FIG. 4B are images showing flow of ions and charges in the electrode of the prior art and the electrode of FIG. 1.

As illustrated in FIG. 4A, in the conventional electrode 2, with the current collector 1 extended in a film shape, the electrode body is simply coated on the current collector 1 to form the electrode 2. In the conventional electrode 2, the electrode body has the predetermined thickness and has the structure coated on the upper surface of the current collector 1.

In contrast, as illustrated in FIG. 4B, in the electrode 200 according to the present example embodiment, there is no separate current collector formed in the base layer, and the conductive fiber base 110 is embedded and combined with the slurry through the TIPS, and then the conductive fiber base 110 is combined and distributed into the inside of the slurry 101. Thus, the conductive fiber 111 is distributed at random positions inside the electrode 200.

That is, the electrode body and the current collector are not coated on one side, but have the structure in which the conductive fiber base 110 is distributed throughout the inside of the slurry 101.

In addition, the conductive fiber 111 distributed in the above way serve as the current collector. Accordingly, it may be confirmed that in the electrode 200 according to the present example embodiment, the structure in which internal structures are connected and distributed in a more complex manner is formed.

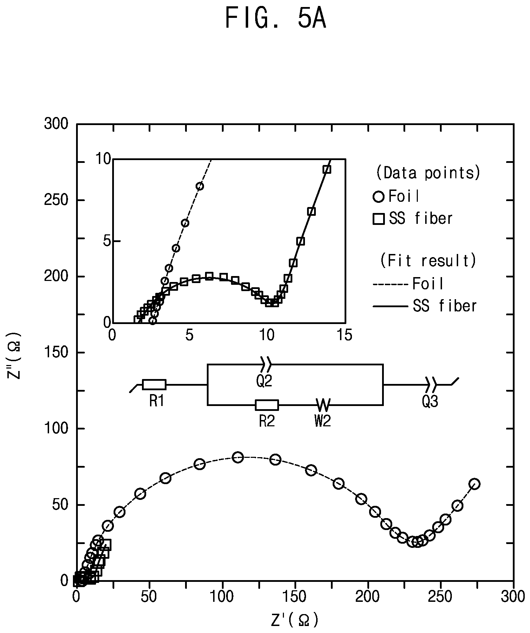

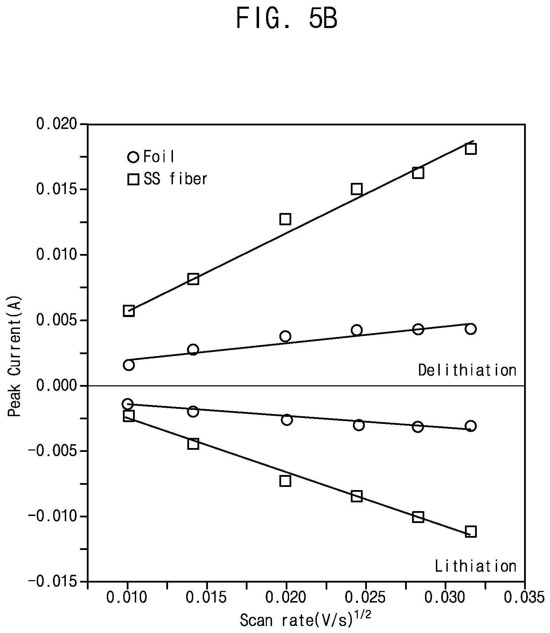

FIG. 5A is a graph showing a Nyquist plot after periodically charging and discharging three times for each electrode of FIG. 4A and FIG. 4B, and FIG. 5B is a graph showing the peak current versus the square root of the scan speed for each electrode of FIG. 4A and FIG. 4B.

In the following graphs including FIG. 5A and FIG. 5B, the electrode 2 according to the prior art in FIG. 4A is indicated as Foil, and the electrode 200 according to the present example embodiment in FIG. 4B is indicated as SS fiber.

Referring to FIG. 5A, as can be seen from the result of periodic charging and discharging of the electrode 2 according to the prior art in FIG. 4A, the charge transfer resistance is relatively high, approximately 200 to 250 Ω.

In contrast, as can be seen from the result of periodic charging and discharging of the electrode 200 according to the present example embodiment of FIG. 4B, it is confirmed that the charge transfer resistance is relatively low, about 10 Ω.

That is, it can be confirmed that the charge transfer resistance in the electrode 200 according to the present example embodiment is relatively very low, and through this, it can be confirmed that the ionic conductivity of the electrode 200 according to the present example embodiment is relatively very high compared to the prior art.

Referring to FIG. 5B, in the case of peak current according to the square root of the scan rate, it can be seen that the increase in the peak current as the square root of the scan rate increases is greater in the case of the electrode 200 according to the present example embodiment than in the electrode 2 according to the prior art.

Through this, it can be confirmed that in the case of the electrode 200 according to the present example embodiment, diffusion is performed much more effectively, and through this, it can be confirmed that the ionic conductivity is relatively very high compared to the prior art.

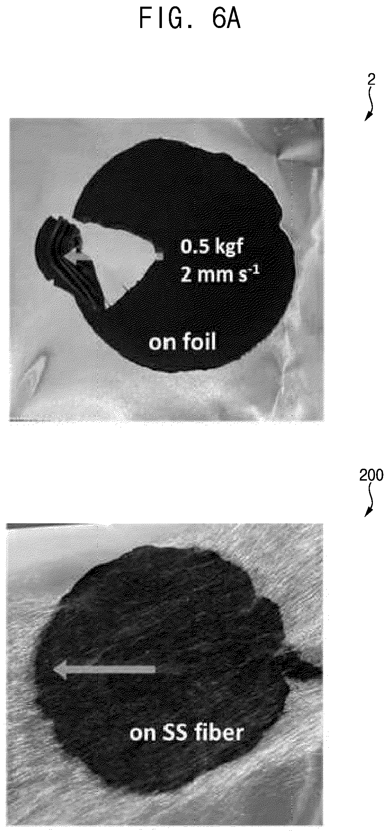

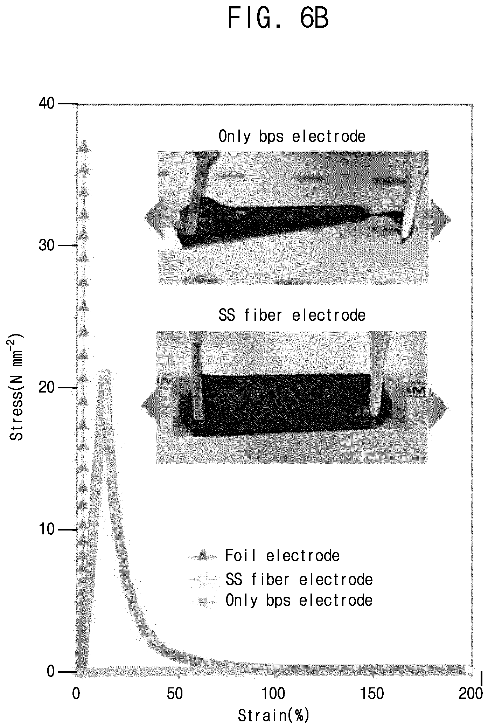

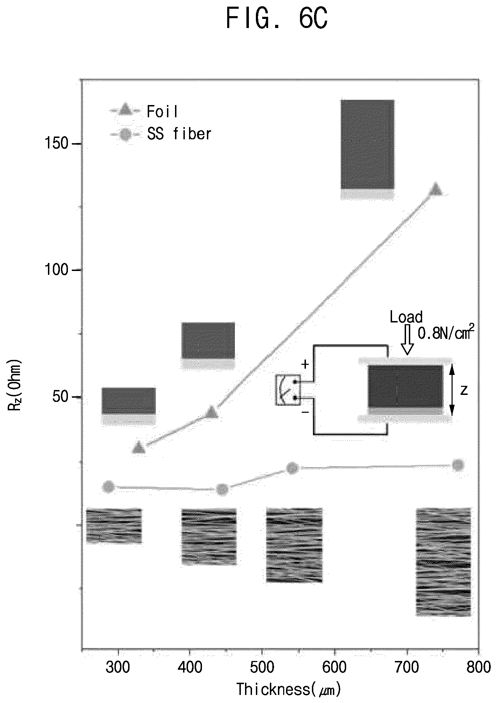

FIG. 6A is an image showing the electrode of the prior art and the electrode of FIG. 1, FIG. 6B is a graph showing the stress/strain tensile strength for each electrode, and FIG. 6C is a graph showing electrical resistance according to thickness for each electrode.

Referring to FIG. 6A, as shown in FIG. 4A, the electrode 2 according to the prior art has the structure in which the electrode body is formed on a film or foil as a current collector. Then, the electrode 2 has the structure in which the electrode layer is peeled, interrupted, or cut as the electrode plate is stretched.

In contrast, the electrode 200 manufactured through the method of FIG. 1, that is, the electrode 200 in FIG. 4B, has the structure in which conductive fiber is embedded and combined with the electrode body in a whole. Then, comparatively, the electrode 200 is not interrupted or cut according to the extension of the electrode.

That is, even when the same force is applied, it can be confirmed that relatively little interruption, peeling, or cutting occurs in the electrode 200 according to the present example embodiment.

In addition, as shown in FIG. 6B, in the stress-strain diagram, in the electrode 2 (Foil electrode) according to the prior art of FIG. 4A, as the strain increases, the stress increases rapidly, and the electrode 2 may be seen to be cut. In contrast, in the electrode 200 (SS fiber electrode) according to the present example embodiment of FIG. 4B, it can be confirmed that even if the strain increases, the stress does not increase beyond a certain level, and the cutting is limited and a relatively stable state is maintained.

As described above, it can be confirmed that the electrode 200 according to the present example embodiment has excellent mechanical stability compared to the electrode 2 according to the prior art.

Furthermore, referring to FIG. 6C, it can be seen that in the case of the electrode (200, SS fiber) according to the present example embodiment, the resistance is maintained at a constant level even if the thickness increases. However, in the electrode 2 (Foil) in the prior art, resistance also increases simultaneously as the thickness increases, and it can be seen that the tendency of resistance to increase with this increase in thickness is different from the trend in the electrode 200 of the present example embodiment.

This means that even if the thickness of the electrode 200 according to the present example embodiment is formed as thick as 500µm or more, the electrical resistance is maintained very small, which ultimately confirms that the electrical conductivity is maintained high.

Therefore, as described above, in manufacturing the electrode 200 according to the present example embodiment, it can be confirmed that it is possible to manufacture a relatively thick film electrode by coating to have a sufficiently thick thickness in the slurry coating process (step S40).

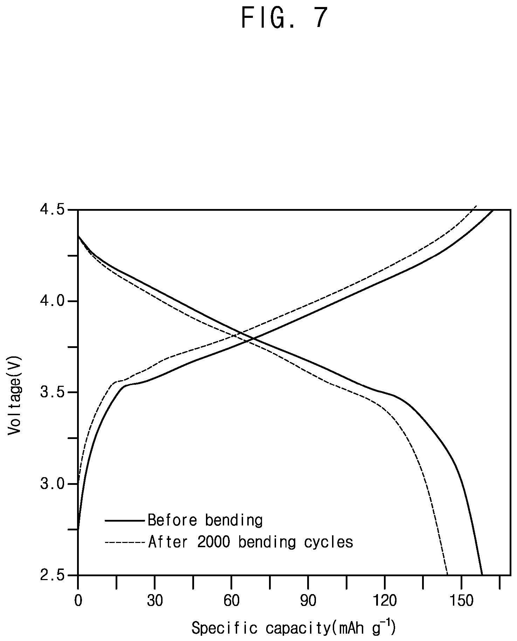

FIG. 7 is a graph showing a charge/discharge profile of the battery applied with the electrode of FIG. 4B.

FIG. 7 shows the charging and discharging state of the electrode 200 according to the present example embodiment after approximately 2,000 repeated bending operations, compared to the initial state.

As confirmed through FIG. 7, it can be seen that even if the bending is repeatedly performed a considerable number of times, approximately 2,000 times, the charge/discharge state of the electrode 200 is maintained very similar to the charge/discharge state in the initial state. Here, the number of the bending of about 2,000 times is an example, and the number of the repeated bending may be varied in various ways, and even in such various cases, the charging and discharging state may be very similar to the initial state.

It can be confirmed that the electrode 200 in the present example embodiment maintains stable charging and discharging even after the repeated bending, and maintains not only mechanical stability but also electrical properties.

As described above, in the case of the electrode 200 manufactured by the method of FIG. 1 according to the present example embodiment, even if it is manufactured as the relatively thick film electrode, not only mechanical stability but also electrochemical properties are stably maintained.

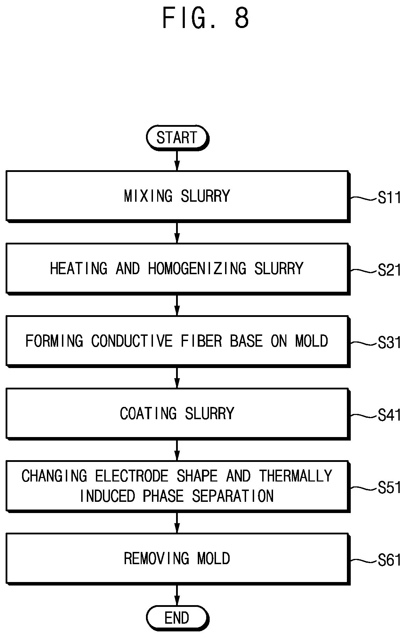

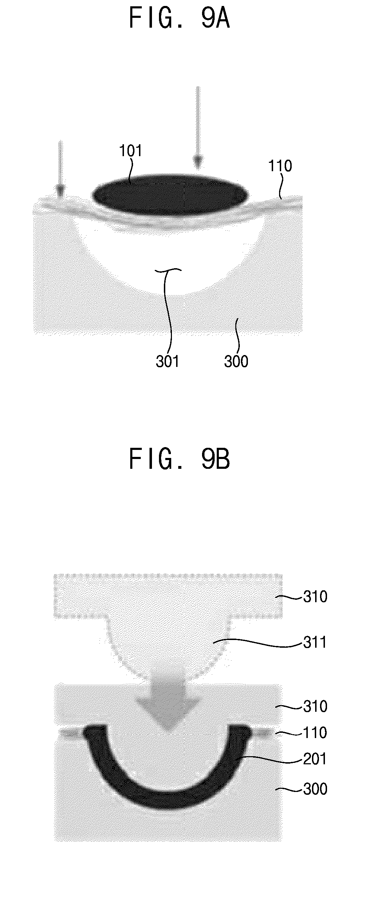

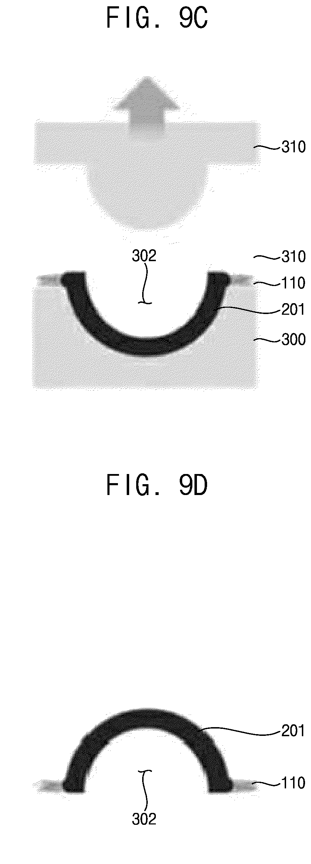

FIG. 8 is a flow chart illustrating a method for manufacturing a high capacity thick film electrode for a battery according to another example embodiment of the present invention. FIG. 9A, FIG. 9B, FIG. 9C and FIG. 9D are process views illustrating the method of FIG. 8.

Firstly, referring to FIG. 8, in the method for manufacturing the electrode according to the present example embodiment, the slurry 100 is mixed (step S11). The mixing process (step S11) is substantially same as the mixing process (step S10) explained referring to FIG. 1.

The active material 10 such as the anode active material or the cathode active material, the binder 20, the conductive material 30 and the solvent 40 are mixed to be the slurry type, and the types of each material are as explained above.

Then, referring to FIG. 8, the mixed slurry 100 is heated and homogenized (step S21), and the homogenized process (step S21) is also substantially same as the homogenized process (step S20) in FIG. 1.

In the homogenized process (step S21), as explained above, the binder 20 is heated to be dissolved in the solvent 40 completely, and the binder 20 is formed to be homogenized with the active material, the conductive material and the solvent as the type of the slurry 101.

The, referring to FIG. 8 and FIG. 9A, with the mold 300 of a predetermined shape prepared, the conductive fiber base 100 having the conductive fiber is formed on the mold 300 (step S31).

Here, the conductive fiber base 110 is substantially same as the conductive fiber base of FIG. 1. The conductive fiber may be a metal wire such as SUS fiber with a thickness of several tens of micrometers (µm) or less, and these unit conductive fiber are complexly entangled to form the conductive fiber base 110.

In the present example embodiment, the conductive fiber base 110 is formed on the mold 300 to have a predetermined area. For example, as illustrated in the figure, if the mold 300 has a three-dimensional encapsulated structure in which a predetermined space 301 is embedded, the conductive fiber base 110 may be formed to extend along the upper portion of the space 301 to be fixed at a corner of the mold 300.

If the mold 300 has, for example, a hemispherical shape, the conductive fiber base 110 may extend on the upper portion of the embedded three-dimensional hemispherical shape formed by the mold 300, with the state fixed along the edge of the circumference of the mold 300.

The shape of the mold 300 is not limited to the concave hemispherical shape as shown, and may have a three-dimensional shape that is indented into various shapes such as a cone shape, a donut shape, a polygonal block shape, a polygonal pyramid shape, etc.

Furthermore, in addition to the single defined shape exemplified above, it can be formed into a complex three-dimensional shape in which concave portions and convex portions are formed in various ways, and the shape is not limited.

Here, the conductive fiber base 110 is fixed to the edge of the mold 300, and the edge area of the mold 300 may be formed to include a sufficient area to stably fix the conductive fiber base 110.

Then, referring to FIG. 8 and FIG. 9A, the slurry 101 is coated on the conductive fiber base 110 formed on the mold 300 (step S41).

In the coating process (step S41), the thickness of the coated slurry 101 may be variously controlled. As explained above, even if the electrode is formed thick by coating the slurry 101 relatively thickly, the electrochemical properties of the electrode may be maintained sufficiently stably.

Therefore, the electrode may be manufactured by coating the slurry 101 with a relatively thick thickness, and the thickness of the slurry 101 may be changed in various ways in consideration of the various thicknesses of the electrode to be manufactured.

Then, referring to FIG. 8 and FIG. 9B, the conductive fiber base 110 and the slurry 101 coated thereon are pressed using a pressing mold 310 to change the shape of the conductive fiber base 110 and the slurry 101 coated thereon.

Here, the shape of the pressing mold 310 may be manufactured considering the shape of the mold 300. For example, as illustrated in the figure, if the mold 300 has a concave hemispherical shape, the pressure mold 310 may be formed so that the convex protruding protrusion 311 has a hemispherical shape.

Here, the degree to which the protrusion 311 protrudes may be designed in consideration of the shape of the concave space 301 and the thickness of the slurry 101 to be coated. It is sufficient that the pressing mold 310 has the strength sufficient to change the shapes of the slurry 101 and the conductive fiber base 110.

It is obvious that the pressurization of the pressing mold 310 may be performed by applying a predetermined pressure. By the pressure of the pressing mold 310, the protrusion 311 is inserted into the space 301 as shown in FIG. 9B, and the shape of the slurry 101 and the conductive fiber base 110 are changed to the same shape as the protrusion 311 and the space 301.

As described above, if the space 301 is formed to be recessed into various three-dimensional shapes, it is obvious that the protrusion 311 must be formed to protrude into a corresponding shape. Furthermore, if the space 301 is formed to include both a recessed shape and a protruding shape, it is obvious that the protruding portion 311 should also be formed to include both a protruding shape and a recessed shape.

In addition, in the pressing process (step S51), the TIPS for cooling the slurry 101 is performed at the same time, and then the electrode 201 having the predetermined shape is finally manufactured.

In the TIPS, as explained above, the binder 20 is cooled below the melting point of the binder 20, and then the binder 20, which was slurried by the heating above the melting point in the previous homogenizing step (step S21), is solidified through the cooling.

In the process of cooling and solidifying the binder 20, the binder 20 is embedded and combined with the conductive fiber 111 included in the conductive fiber base 110, and has the porous structure.

Further, the TIPS process is performed with the shape change process by the pressing mold at the same time, and then the shape of the electrode 201 changes depending on the shape of the space 301 and the protrusion 311, and at the same time, the conductive fiber 111 and the binder 20 are embedded and combined to form a porous structure as a whole.

For performing the TIPS process and the pressing process at the same time, the pressing mold 310 may pressurize the shape of the slurry 101 and the conductive fiber base 110 at a predetermined pressure, and the cooling of the slurry 101 and the conductive fiber base 110 is performed through a separate cooling unit.

Alternatively, a predetermined cooling unit is provided inside the pressing mold 310, or a process of pressing the shape of the slurry 101 and the conductive fiber base 110 with a predetermined pressure while the pressure mold 310 itself is cooled, and then the pressing process and the TIPS process may be performed at the same time.

Then, referring to FIG. 8 and FIG. 9C, the pressing mold 310 is removed to the outside (step S61), and then as illustrated in FIG. 9D, the electrode 201 reflecting the shape of the space 301 and the protrusion 311 is manufactured.

As for the electrode 201, only the conductive fiber base 110 remains in the portion not coated with the slurry 101, and the conductive fiber base 110 remaining in this way remains in a partially protruding form at the end of the electrode 201.

Here, some of the remaining conductive fiber base 110 may be selectively removed. Removal of the remaining conductive fiber base 110 may be performed using a separate cutting unit, but is not limited thereto.

As described above, the electrode 201 manufactured in the above method has a hemispherical shape with a predetermined thickness, like the shape of the space 301 and the protrusion 311, and the inside of the electrode 201 has the same structure as described referring to FIG. 3 and FIG. 4B.

According to the present example embodiment, it is possible to manufacture the electrode 201 with the predetermined three-dimensional shape and the porous structure in which the conductive fiber 111 is distributed, and in the electrode 201, the conductive fiber 111, which serves as the current collector, is distributed throughout the inside of the electrode 201.

Here, by designing the shape of the mold 300 and the pressing mold 310, the electrode of the necessary three-dimensional shape may be manufactured, so various necessary electrodes may be manufactured through an easy process. Then, examples of electrodes of various shapes will be described below.

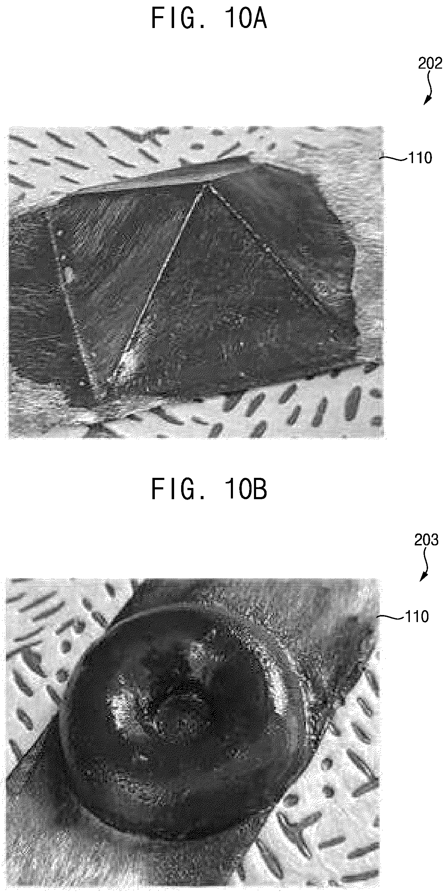

FIG. 10A and FIG. 10B are images showing an electrode manufactured by the method of FIG. 8.

Referring to FIG. 10A, in manufacturing the electrode using the method of FIG. 8, the space 301 of the mold 300 may be formed into an embedded pyramid shape, that is, a square pyramid shape, and likewise, the protrusion 311 of the pressing mold 310 may also be formed into a corresponding protruding pyramid shape, that is, the square pyramid shape.

Through this, as shown, the electrode 202 having the pyramid shape may be formed.

Likewise, referring to FIG. 10B, in manufacturing the electrode using the method of FIG. 8, the space 301 of the mold 300 may be formed into an embedded donut shape, and likewise, the protrusion 311 of the pressing mold 310 may also be formed into a corresponding protruding donut shape.

Through this, as shown, the electrode 203 having the donut shape may be formed.

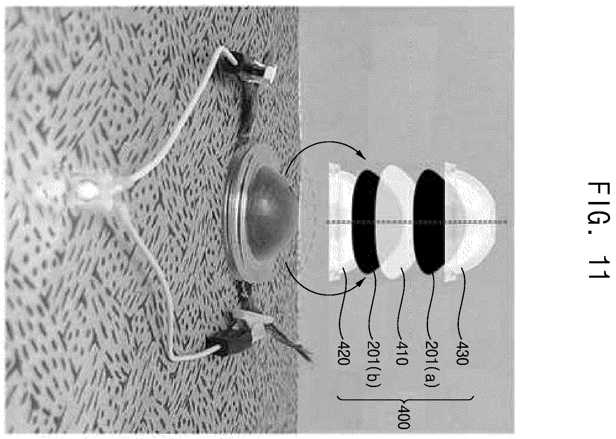

FIG. 11 is an exploded perspective view illustrating a battery having the electrode manufacture by the method of FIG. 8.

Referring to FIG. 11, the battery 400 includes the electrode 201 manufactured by the method for manufacturing the electrode explained referring to FIG. 8.

The battery 400 includes an anode electrode 201(a), a cathode electrode 201(b), a separator 410, a lower cover 420 and an upper cover 430, and has a hemispherical shape in a whole.

Here, the anode electrode 201(a) is the electrode manufactured by the method of FIG. 8, and the slurry is prepared to contain the positive (anode) electrode active material and then the anode electrode may be manufactured.

Likewise, the cathode electrode 201(b) is the electrode manufactured by the method of FIG. 8, and the slurry is prepared to contain the negative (cathode) electrode active material and then the cathode electrode may be manufactured.

In addition, both of these positive and negative (anode and cathode) electrodes are manufactured in a three-dimensional hemispherical shape, more precisely, a hemispherical shell shape with a space formed inside.

In addition, since both the positive electrode and the negative (anode and cathode) electrode are manufactured in the hemispherical shell shape, not only the separator 410 but also the lower cover 420 and the upper cover 430 are manufactured in the same hemispherical shell shape.

Then, the lower cover 420, the cathode electrode 201(b), the separator 410, the anode electrode 201(a) and the upper cover 430 are sequentially stacked, to be formed as the battery 400. Here, the anode electrode is explained as the positive electrode and the cathode electrode is explained as the negative electrode, but alternatively, the anode electrode may be the negative electrode and the cathode electrode may the positive electrode.

In addition, the battery 400 manufactured in the above method stably supplies power, as shown in FIG. 11.

Furthermore, FIG. 11 illustrates that the battery 400 has the hemispherical shape, but as explained above, the electrode may be manufactured in various three-dimensional shapes. Thus, by manufacturing the separator 410, the lower cover 420 and the upper cover 430 in the same three-dimensional shape, the battery 400 may be manufactured in various three-dimensional shapes.

According to some exemplary embodiments of the present invention, in the manufacture of electrodes, the active material, conductive material and binder are complexed through so-called thermally induced phase separation (TIPS) with respect to the slurry coated on the conductive fiber base, so that the electrode layer is combined with the conductive fiber and forms a porous structure, and an electrode in which the conductive fiber acts as a current collector may be possible to be manufactured. Accordingly, it is possible to manufacture the electrode having relatively high mechanical strength, ionic conductivity, and electrical conductivity.

In particular, as the conductive fibers are combined in a form embedded in the slurry, a structure is produced in which the current collector is uniformly distributed throughout the electrode. Thus, even if it is formed as a thick film electrode with a relatively large thickness, excellent electrochemical properties of the electrode may be maintained. Furthermore, a constant electrical capacity may be maintained regardless of repetitive bending deformation, thereby improving electrical stability.

Alternatively, in the manufacture of the electrode, a mold may be used to manufacture a three-dimensional electrode with a porous structure with conductive fibers embedded therein, thereby maintaining the mechanical stability of the three-dimensional shape and diversifying the usability of the electrode with various structures.

The mold is manufactured to include a space of the desired three-dimensional shape, and in a state in which a slurry is coated based on the conductive fiber, the shapes of the slurry and the conductive fiber are changed using a pressure mold and phase separation is performed. An electrode having mechanical stability of the three-dimensional shape may be easily manufactured.

Therefore, the electrode manufactured in this way has the electrical, mechanical, and chemical properties of the previous planar thick film electrode and may be used as a variety of three-dimensional structure electrodes.

In particular, the electrode may be manufactured into a battery using other components having the same shape and structure, thus diversifying its usability into a three-dimensional battery with excellent electrical, mechanical, and chemical properties.

Having described exemplary embodiments of the present invention, it is further noted that it is readily apparent to those of reasonable skill in the art that various modifications may be made without departing from the spirit and scope of the invention which is defined by the metes and bounds of the appended claims.

## Claims

1. A method for manufacturing an electrode, the method comprising:
mixing a slurry having an active material, a binder, a conductive material and a solvent;
heating and homogenizing the slurry;
forming a conductive fiber base having a conductive fiber;
coating the slurry on the conductive fiber base by a predetermined thickness; and
cooling and thermally induced phase separating (TIPS) the coated slurry.

2. The method of claim 1, wherein in the heating and homogenizing the slurry,
the binder is heated so that the binder is completely dissolved in the solvent.

3. The method of claim 1, wherein in the coating the slurry,
the slurry is coated on the conductive fiber base by a predetermined thickness considering a thickness of the electrode.

4. The method of claim 1, wherein in the cooling and thermally induced phase separating,
the binder combines with the conductive fiber and forms a porous structure, as the slurry cools.

5. The method of claim 4, wherein in the cooling and thermally induced phase separating,
a predetermined pressure is uniformly applied to the slurry formed as the porous structure.

6. The method of claim 1, wherein the active material is an anode active material or a cathode active material, the binder is polyvinylidene fluoride (PVDF), the conductive material is a carbon black, and the solvent is a carbonate based electrolyte solvent.

7. The method of claim 6, wherein the solvent is a mixture of ethylene carbonate (EC) and polycarbonate (PC).

8. The method of claim 1, wherein the conductive fiber is a metal wire with a thickness of tens of micrometers (µm) or less.

9. A method of manufacturing an electrode, the method comprising:
mixing a slurry having an active material, a binder, a conductive material and a solvent;
heating and homogenizing the slurry;
forming a conductive fiber base having a conductive fiber on a mold;
coating the slurry on the conductive fiber base by a predetermined thickness;
deforming the conductive fiber base and the coated slurry; and
removing the mold.

10. The method of claim 9, wherein the mold has a space embedded in a three-dimensional shape.

11. The method of claim 10, wherein in the forming the conductive fiber base on the mold,
the conductive fiber base extends over the space, and an end edge of the conductive fiber base is positioned at the mold.

12. The method of claim 10, wherein in the deforming the conductive fiber base and the coated slurry,
the conductive fiber base and the coated slurry are pressurized to be deformed.

13. The method of claim 12, wherein the conductive fiber base and the coated slurry are deformed using a pressing mold having a protrusion inserted into the space.

14. The method of claim 13, wherein in the deforming the conductive fiber base and the coated slurry,
the coated slurry is cooled and is subjected to thermally induced phase separation (TIPS).

15. The method of claim 13, wherein the coated slurry is cooled by an additional cooling unit or a cooling unit configured in the pressing mold.

16. The method of claim 13, wherein with the pressing mold itself cooled, the conductive fiber base and the coated slurry are deformed and cooled with a predetermined pressure.

17. The electrode manufactured by the method of any one of claim 9 to claim 16, wherein the electrode has a three-dimensional shape.

18. The electrode of claim 17, wherein the electrode has any one of a hemispherical shape, a cone shape, a donut shape, a polygonal block shape and a polygonal pyramid shape.

19. A battery comprising:
an anode electrode manufactured by the method of any one of claim 9 to claim 16, and having an anode active material;
a cathode electrode manufactured by the method of any one of claim 9 to claim 16, and having a cathode active material;
a separator disposed between the anode electrode and the cathode electrode;
an upper cover configured to cover an outside of the anode electrode; and
a lower cover configured to cover an outside of the cathode electrode.

20. The battery of claim 19, wherein the anode electrode, the cathode electrode, the separator, the upper cover and the lower cover are stacked with each other to form a three-dimensional shape.
